# EUROPEAN PATENT SPECIFICATION

(11) **EP 3 307 481 B1**
(45) Date of publication and mention of the grant of the patent: **23.10.2024**
(21) Application number: 16731832.8
(22) Date of filing: 15.06.2016
(51) Int. Cl.: B23Q 17/24, B23Q 17/22, G01B 11/03, B23Q 1/62, G05B 19/00

(54) **CARTESIAN NUMERICALLY CONTROLLED MACHINE TOOL FOR HIGH-PRECISION MACHINING**
KARTESISCHE NUMERISCH GESTEUERTE WERKZEUGMASCHINE ZUR HOCHPRÄZISIONSBEARBEITUNG
MACHINE-OUTIL À COMMANDE NUMÉRIQUE DE TYPE CARTÉSIEN PERMETTANT UN USINAGE DE HAUTE PRÉCISION

(30) Priority: 15.06.2015 IT UB20151398
(43) Date of publication of application: 18.04.2018
(73) Proprietor: HPT Sinergy S.r.l., 35131 Padova (IT)
(72) Inventor: POLETTO, Luca, 35136 Padova (IT); FEDEL, Massimo, 35132 Padova (IT); PICCOLO, Gabriele, 35012 Camposampiero (IT)
(74) Representative: Maroscia, Antonio
(86) International application number: PCT/EP2016/063721
(87) International publication number: WO 2016/202843

(56) References cited:
- DE-A1- 3 334 460
- GB-A- 2 188 571

## Description

The present invention relates to a Cartesian numerically controlled machine tool for high-precision machining.

Nowadays the need is increasingly felt, by makers of mechanical components for removing material, to be capable of providing products of increasingly higher quality while at the same time also increasing productivity.

This requires machine tools for which an increase in the overall performance is not obtained at the expense of the quality of the product.

Essential requirements for a machine tool are the capacity to move rapidly along complex trajectories while retaining a high precision in its movements, and the ability to remove material as rapidly as possible without generating excessive vibrations, together with the ability to verify directly, on the machine, the quality of the machined piece, by factoring in the qualities typical of coordinate measuring machines (CMM).

Nowadays makers of machine tools strive to adopt light structures to allow higher accelerations that make it possible to minimize the costs of construction, reduce energy consumption, and maximize productivity; in such context what becomes increasingly important is the interaction between the control systems and the dynamic of the mechanical parts in motion, taking account of the deformations of the structure of the machine tool with the variation, for example, of environmental conditions.

In particular, the accuracy of Cartesian numerically controlled machine tools of large dimensions, i.e. with an excursion of the controlled axes that exceeds five meters, is limited by structural deformations that affect the components of the chassis.

Such machine tools are designed to provide a piece by way of a series of activities that are adapted to define such piece so that its shape and its dimensions reflect those specified by a corresponding technical drawing, and such drawing for each geometric peculiarity defines the tolerances which must be verified by way of suitable measuring activities.

Usually, for mechanical pieces of large dimensions, although verifying the tolerances achieved is necessary, it is not performed owing to the costs that such procedure would require.

In fact, a machine tool is a means of production that, during its life cycle, must be kept in optimal conditions of efficiency if it is to be capable of operating within the limits specified by the maker and so as to provide products that conform to the tolerances specified by the design.

Machine tools in fact suffer degradation of performance over time, owing to the surrounding environmental conditions, thus losing reliability.

For this reason, machine tools must be periodically checked to analyze the state of the machine and to be able to define the interventions necessary to maintain the machine in the operating conditions as originally specified.

Nowadays checking the correct operation of a machine tool is done with special measurement and analysis systems, which are adapted to be installed in the neighborhood of such machine tool, and with systems for checking the product provided, such as coordinate measuring machines (CMM).

GB2188571 discloses an alignment system for a machine numerically controlled tool.

The aim of the present invention is to provide a Cartesian numerically controlled machine tool for high-precision machining, which is capable of
overcoming the above mentioned drawbacks of conventional machine tools. In particular, within this aim an object of the invention is to provide a machine tool with which it is possible to determine with precision the displacements of the machining head with respect to the specified operating positions and trajectories.

Another object of the invention is to provide an apparatus in order to determine such displacements.

Another object of the invention is to provide a machine tool that is rapidly adaptable to the vibrational and environmental conditions of operation.

This aim and these and other objects which will become better evident hereinafter are achieved by a Cartesian numerically controlled machine tool for high-precision machining, according to claim 1.

Further characteristics and advantages of the invention will become better apparent from the description of six preferred, but not exclusive, embodiments of the machine tool according to the invention, which are illustrated for the purposes of non-limiting example in the accompanying drawings wherein:
Figure 1 is a schematic perspective view of a machine tool according to the invention in a first embodiment thereof;
Figure 2 is a schematic perspective view of a first detail of the optical means of detection and monitoring;
Figure 3 is a schematic perspective view of a second detail of the optical means of detection and monitoring;
Figure 4 is a schematic perspective view of a third detail of the optical means of detection and monitoring;
Figure 5 is a schematic perspective view of a fourth detail of the optical means of detection and monitoring;
Figure 6 is a schematic perspective view of a fifth detail of the optical means of detection and monitoring;
Figure 7 is a schematic perspective view of a sixth detail of the optical means of detection and monitoring;
Figure 8 is a schematic perspective view of a machine tool according to the invention in a second embodiment thereof;
Figure 9 is a schematic perspective view of a machine tool according to the invention in a third embodiment thereof;
Figure 10 is a schematic perspective view of a machine tool according to the invention in a fourth embodiment thereof;
Figure 11 is a schematic perspective view of a machine tool according to the invention in a fifth embodiment thereof;
Figure 12 is a schematic perspective view of a machine tool according to the invention in a sixth embodiment thereof;
Figure 13 is a schematic side view of part of the means of detection and monitoring of the machine tool in Figure 12;
Figure 14 is a variation of embodiment of the means of detection and monitoring in Figure 13;
Figure 15 schematically illustrates a front elevation view of the machine in Figure 12.

With reference to the figures, a Cartesian numerically controlled machine tool for high-precision machining according to the invention is generally designated with the reference numeral 10.

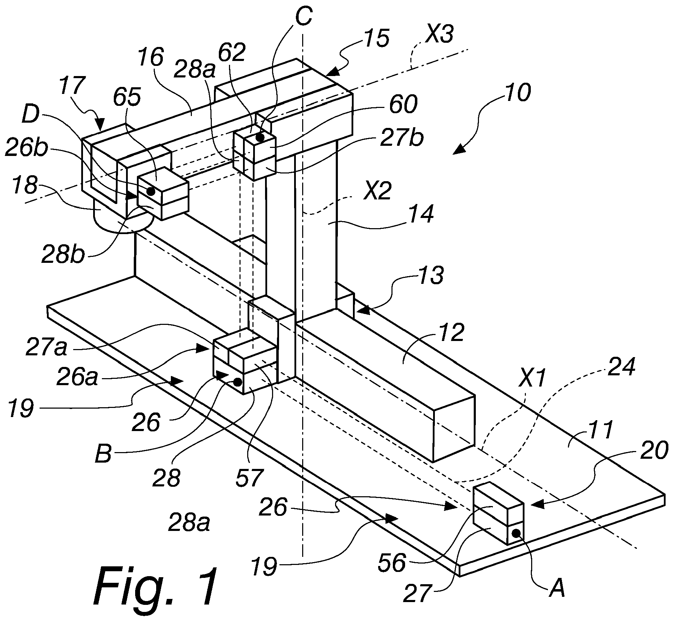

Such machine tool 10 comprises:
- a footing 11,
- a first part 12 with first movement means 13 for the movement of a second part 14 with respect to a first controlled axis X1,
- a second part 14 with second movement means 15 for the movement of a third part 16 with respect to a second controlled axis X2,
- a third part 16 with third movement means 17 for the movement of a machining head 18 with respect to a third controlled axis X3,
- a machining head 18,
as shown schematically for the purposes of example in Figure 1.

The Cartesian machine tool 10 comprises, on board, optical means 19 for detecting and monitoring the position of at least one reference nodal point for each of one or more of the controlled axes X1, X2, X3 with respect to a reference device 20 which is integral with a part of the machine tool 10.

Reference nodal points are therefore established on the various parts of the machine tool 10, for example a reference nodal point A for the footing 11, a reference nodal point B for the first part 12 of the machine tool, a reference nodal point C for the second part 14, and a reference nodal point D for the third part 16.

By periodically measuring the movements of the nodal point B with respect to the nodal point A it is possible to determine, for example, the deformations of the first part 12 with respect to the footing 11.

Similarly, again for example, by periodically measuring the movements of the nodal point C with respect to the nodal point B it is possible to determine the deformations of the second part 14 with respect to the first part 12.

In the first embodiment of the machine tool 10 according to the invention, such reference device 20 is integral with the footing 11 and is associated with the nodal point A.

The nodal points are obviously understood to be regions where the components of the means of detection and monitoring are positioned.

It should be understood that the reference device 20 is part of the optical means 19 of detection and monitoring.

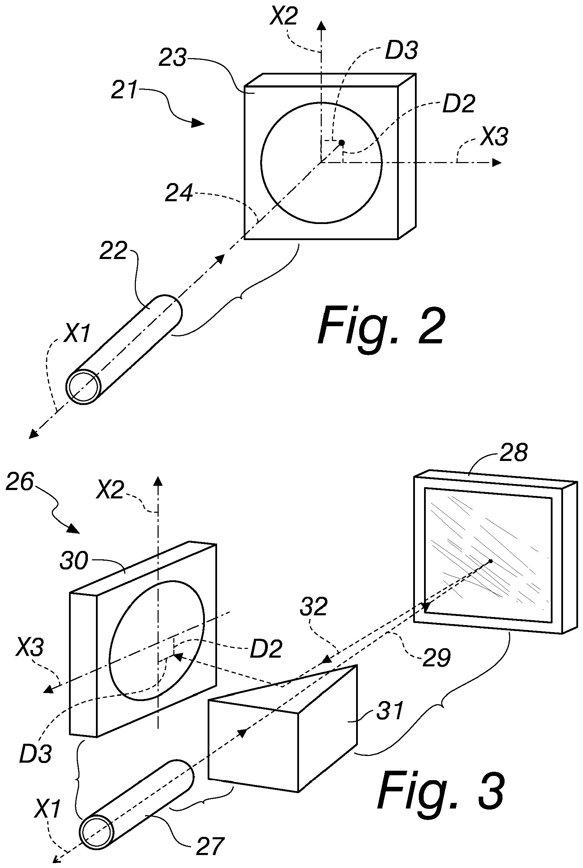

Such optical means 19 comprise, as shown schematically in Figure 2, at least one device 21 for detecting the translation of a nodal point of a controlled axis, for example of the nodal point B relating to the first part 12 and therefore to the axis X1, along two axes X2 and X3 which are perpendicular to the controlled axis X1.

Such device 21 for detecting the translation of a nodal point comprises, for example, an emitter of a laser beam 22, which is adapted to be fixed to a part of the machine, for example to the footing 11, at a first nodal point, for example the nodal point A, and an element for receiving the light signal, for example an optical position sensor 23, known in the sector as a Position Sensitive Device (PSD), which is capable of measuring the position of a point of light emitted by the laser emitter 22 with respect to two axes which are mutually perpendicular, and is adapted to be positioned at a second nodal point, for example the nodal point B.

The laser emitter 22 is arranged so as to be integral with a first part of the machine tool, for example, as mentioned, the footing 11, in such a way that its laser beam 24 is parallel to an axis X1 to detect and monitor for deformations, while the optical position sensor 23 is arranged so as to be integral with a second part of the machine, for example integral with the second part 14, which is designed to slide on the first part 12 of the machine along the axis X1.

The optical position sensor 23 is positioned so that when calibration is complete the point of light produced by the laser beam 24 is at the origin of the reference axes X2 and X3 of the optical sensor 23.

In this manner it is possible to detect the relative translations of the laser emitter 22 with respect to the optical sensor 23 according to the axes X2 and X3, indicated in Figure 2 with D2 and D3 respectively.

The optical means 19 comprise, as shown schematically in Figure 3, at least one device 26 for detecting the rotation of a controlled axis, for example the axis X1, about two axes, X2 and X3, which are perpendicular to such controlled axis, and at a reference nodal point.

Such device 26 for detecting the rotation of a controlled axis comprises, for example:
- an emitter of a laser beam 27, adapted to be fixed to a part of the machine, for example to the footing 11, at a nodal point, for example the nodal point A referred to the footing 11,
- a fully reflective mirror 28, arranged so as to be integral with a second part of the machine, for example the second part 14 of the machine, and positioned at another nodal point, for example the nodal point B so as to be perpendicular to the laser beam when calibration is complete,
- an optical position sensor (PSD) 30, integral with the laser emitter 27, and therefore referable to the first nodal point A, positioned with an arrangement perpendicular to the plane of the mirror 28 when calibration is complete,
- a beam splitter 31, positioned proximate to the laser emitter 27 and integrally therewith, and therefore referable to the first nodal point A, and adapted to allow the laser beam 29 to pass through to the mirror 28 and to deflect the reflected laser beam 32 toward the optical sensor 30.

In this manner it is possible to detect the rotations of the mirror 28 about the axes X2 and X3 at the second nodal point B, the mirror 28 being integral with the second part 14 of the machine, by calculating them from the translations according to the axes X2 and X3 of the reflected point of light, which are detected by the optical sensor 30 and indicated in Figure 3 with D2 and D3 respectively.

The optical means 19 comprise, as an alternative to the device 21 for detecting the translation of a nodal point of a controlled axis and to the device 26 for detecting the rotation of a controlled axis, a device 35 for simultaneously detecting the translation of a nodal point of a controlled axis along two axes that are perpendicular to that same controlled axis, and the rotation of a controlled axis about two axes that are perpendicular to that same controlled axis.

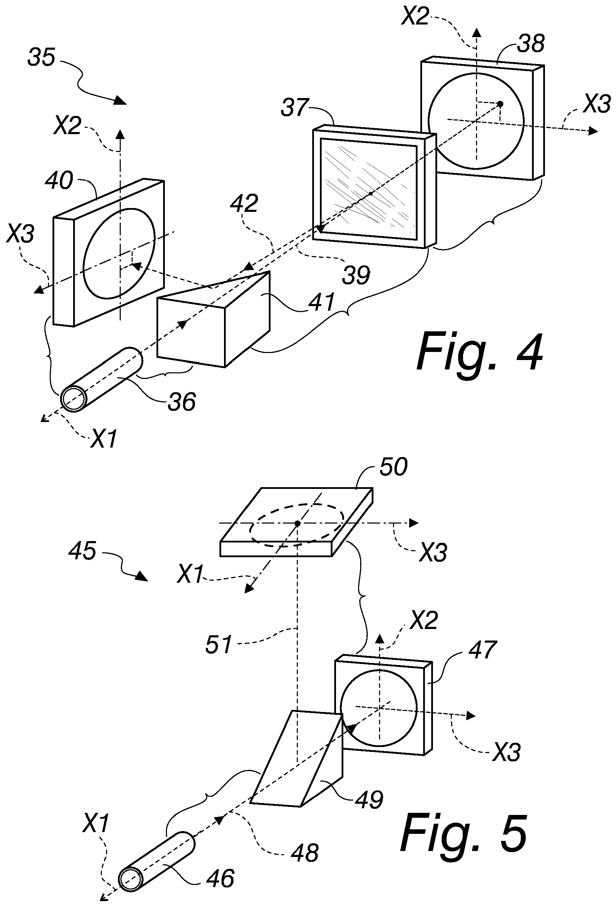

Such device 35 for simultaneously detecting translation and rotation of a controlled axis, for example X1, is shown schematically in Figure 4.

Such device 35 for simultaneously detecting translation and rotation of a controlled axis, for example the axis X1, comprises, for example:
- an emitter of a laser beam 36, adapted to be fixed to a part of the machine, for example to the footing 11, and therefore referable to the first nodal point A,
- a partially reflective mirror 37, arranged so as to be integral with a second part of the machine, for example the second part 14 of the machine, and therefore referable to the second nodal point B, so as to be perpendicular to the laser beam when calibration is complete,
- a first optical position sensor (PSD) 38, positioned behind the partially reflective mirror and integral therewith and with the second part of the machine, and therefore referable to the second nodal point B, and adapted to block the directed laser beam 39 for detecting the relative translations of the laser emitter 36 with respect to the optical sensor 38 according to the axes X2 and X3,

- a second optical position sensor (PSD) 40, integral with the laser emitter 36, and therefore referable to the first nodal point A, positioned with an arrangement perpendicular to the plane of the mirror 37 when calibration is complete, for detecting the rotations of the mirror 37, and of the first optical sensor 38, about the axes X2 and X3, at the second nodal point B,
- a beam splitter 41, positioned proximate to the laser emitter 36 and integrally therewith, and therefore referable to the first nodal point A, and adapted to allow the laser beam 39 to pass through to the mirror 37 and to the first optical sensor 38, and to deflect the reflected laser beam 40 toward the optical sensor 42.

As an alternative to two consecutive devices 21 for detecting the translation, one for detecting the translation of a first nodal point referred to a first controlled axis X1, relating to a first part of the machine, for example the first part 12, and another for detecting the translation of a second nodal point referred to a second controlled axis X2, relating to a second part of the machine, for example the second part 14, arranged so as to translate along the axis X1 on the first part 12, the optical means 19 can comprise a device 45 for simultaneously detecting the translation of two nodal points which are referred to corresponding mutually perpendicular controlled axes, for example the axes X1 and X2 in Figure 5, along two axes that are perpendicular to each controlled axis.

Such device 45 for simultaneously detecting the translation of two nodal points, for example B and C, which are referred to mutually perpendicular controlled axes, for example the axis X1 and the axis X2, comprises:
- an emitter of a laser beam 46, adapted to be fixed to a part of the machine, for example to the footing 11, and therefore referable to the first nodal point A, and adapted to operate parallel to the axis X1,
- a first optical position sensor (PSD) 47, integral with a second part of the machine, for example the second part 14, and therefore referable to the second nodal point B, and adapted to block the directed laser beam 48 for detecting the relative translations of the laser emitter 46 with respect to the optical sensor 47 according to the axes X2 and X3,
- a deflector 49 that partially transmits the light beam, for example a partially transmissive pentaprism, positioned between the laser emitter 46 and the first optical sensor 47, proximate to and integral with the latter and with the second part of the machine, for example the second part 14 of the machine, and therefore referable to the second nodal point B, which is adapted to deflect the laser beam 48 toward a second optical position sensor 50 which is integral with a third part of the machine, for example the third part 16, and therefore is referable to the third nodal point C, and is positioned so as to have an arrangement perpendicular to the deflected laser beam 51 when calibration is complete.

With such device 45 for simultaneously detecting the translation of two nodal points referred to two controlled axes, it is possible to detect the translations of the two axes X1 and X2 with a single laser emitter instead of with two laser emitters.

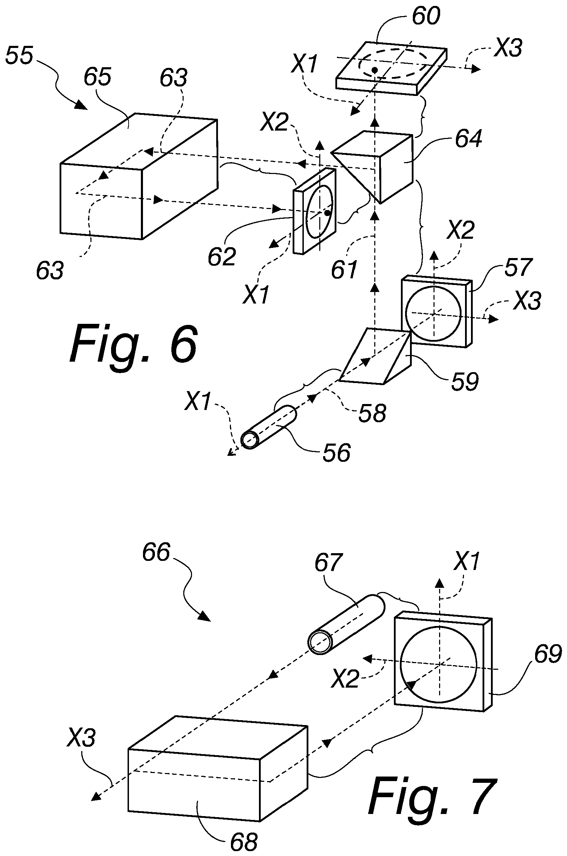

As an alternative to three consecutive devices 21 for detecting the translation, a first for detecting the translation of a first nodal point referred to a first controlled axis X1, relating to a first part of the machine, for example the first part 12, a second for detecting the translation of a second nodal point referred to a second controlled axis X2, relating to a second part of the machine, for example the second part 14, and a third for detecting the translation of a third nodal point referred to a third controlled axis X3, relating to a third part of the machine, for example the third part 16, the optical means 19 can comprise a device 55 for simultaneously detecting the translation of three nodal points, for example the nodal points B, C and D, which are referred to corresponding mutually perpendicular controlled axes, for example the axes X1, X2 and X3 in Figure 6.

Such device 55 for simultaneously detecting the translation of three mutually perpendicular controlled axes comprises:
- an emitter of a laser beam 56, adapted to be fixed to a part of the machine, for example to the footing 11, and therefore referable to the first nodal point A, and adapted to operate parallel to the axis X1,
- a first optical position sensor (PSD) 57, integral with a second part of the machine, for example the second part 14, and therefore referable to the second nodal point B, and adapted to block the directed laser beam 58 for detecting the relative translations of the laser emitter 56 with respect to the optical sensor 57 according to the axes X2 and X3,
- a first deflector that partially transmits the light beam 59, for example a partially transmissive pentaprism, positioned between the laser emitter 56 and the first optical sensor 57, proximate to and integral with the latter and with the second part of the machine, for example the second part 14 of the machine, and therefore referable to the second nodal point B, which is adapted to deflect the laser beam 58 toward a second optical position sensor 60 which is integral with a third part of the machine, for example the third part 16, and therefore is referable to the third nodal point C, and is positioned so as to have an arrangement perpendicular to the deflected laser beam 61 when calibration is complete,
- a second deflector that partially transmits the light beam 64, for example a partially transmissive pentaprism, positioned between the first partially transmissive deflector 59 and the second optical sensor 60, arranged proximate to and integral with the latter and with the third part of the machine, for example the third part 16 of the machine, and therefore referable to the third nodal point C, which is adapted to deflect the laser beam 58 toward a third optical position sensor 62 which is integral with such third part of the machine, for example the third part 16, and is positioned so as to have an arrangement perpendicular to the deflected laser beam 63 when calibration is complete.

Such device 55 also comprises a 180° reflection element 65, for example a cubic reflector prism, known as a 'corner reflector', designed to be arranged so that it is integral with a machining head 18, and therefore referable to the fourth nodal point D, such machining head 18 being able to move with respect to the third part 16 of the machine.

With the use of such 180° reflection element 65, use is made of a passive element by way of which it is possible not to use, at the machining head 18, components that carry electric current and which therefore could negatively affect the operation of the machining head 18.

With such device 55 for simultaneously detecting the translation of three nodal points each referred to one of three controlled axes, it is possible to detect the translations of three axes X1, X2 and X3 with a single laser emitter instead of with three laser emitters.

For detecting deformations owing to translation of the part of the machine supporting the machining head 18, for example the third part 16, the means 19 of detection and monitoring can comprise a device 66 for detecting the translation of the controlled axis X3, with respect to which the machining head 18 slides, along two axes that are mutually perpendicular X1 and X2.

Such device 66, shown for the purposes of example in Figure 7, comprises a laser emitter 67 which is integral with the third part 16 of the machine, referable to the third nodal point C, a 180° reflection element 68, referable to the fourth nodal point D, which is integral with the machining head 18, and an optical position sensor 69 which is integral with the third part 16 of the machine, referable to the third nodal point C, toward which the laser beam is deflected.

In the first embodiment in Figure 1, which is illustrative and non- limiting of the invention, for detecting and monitoring the linear displacements, i.e. the translations, of the nodal points B, C and D referred to the three axes X1, X2 and X3, the means of detection and monitoring 19 comprise:
- a laser emitter 56, which is integral with the footing 11,
- a first PSD optical sensor 57, which is integral with the second part 14, with a corresponding first deflector that partially transmits the light beam 59,
- a second PSD optical sensor 60, which is integral with the third part 16, with a respective second deflector that partially transmits the light beam 64,
- a third PSD optical sensor 62, which is integral with the third part 16,
- a 180° reflection element 65, preset to be arranged so as to be integral with the machining head 18.

For detecting and monitoring the angular displacements of the axes X1, X2 and X3, again at the nodal points B, C and D, the means 19 of detection and monitoring comprise:
- a first device 26 for detecting the rotation of a first controlled axis X1, with an emitter of a laser beam 27, which is fixed to the footing 11, and a fully reflective mirror 28, which is integral with the second part 14 of the machine,
- a second device 26a for detecting the rotation of a second controlled axis X2, with an emitter of a laser beam 27a, which is fixed to the footing 11, and a fully reflective mirror 28a, which is integral with the third part 16 of the machine,
- a third device 26b for detecting the rotation of a third controlled axis X3, with an emitter of a laser beam 27b, which is fixed to the third part 16, and a fully reflective mirror 28b, which is integral with the machining head 18.

With such means of detection and monitoring 19, linear and angular displacements are detected of the three axes X1, X2 and X3 with the minimum of components.

The PSD optical sensors and the laser emitters are managed by corresponding electronic boards.

Such electronic boards are connected by way of a digital communication channel to a central control and management unit that conducts the actual communication with the CNC (Computer Numerical Control) of the machine tool 10.

Each electronic board has, on board, a controller for functionality and switching-on upon logical command of the central control and management unit, such central control and management unit also handling diagnostics and the supervision of the entire system.

The central control and management unit can directly program each single electronic board in order to set parameters such as the sampling time and the number of samples to carry out for each acquisition.

There are four logical operating modes, which are the following:
- diagnostic: the CNC verifies the state of health of the system, except for communication errors, overshooting temperature thresholds, and malfunctions of laser emitters and PSD optical sensors;
- calibration, which occurs according to an exact procedure: the CNC moves one controlled axis at a time and acquires the readings of the PSD optical sensors at predetermined points along the axis; such values can be stored on the CNC or on the central control and management unit, where they are used by a polynomial regression algorithm to calculate the parameters of the reference curve. All this is carried out for each axis, so that each output of the PSD optical sensors has its own reference curve, found by calculating the polynomial by points, independently of the other axes.

The values used are always those in output from the boards on board the optical sensors, therefore they are the result of an average of one second of acquisition.
- measurement: the CNC requests the measurement of the displacements. In this mode the system collects the various outputs of the sensors, and it also asks the CNC for the heights and, if they are stored thereon, the parameters of the polynomials, then it executes the measurement algorithm and returns the triplet of values, with respect to the three axes X1, X2 and X3, of deviation from the calibration values.
- scanning: the CNC executes a measurement on each point for calibration, stores the difference and returns the various differences along the axis in a format to be decided (table, graph, OK-KO state, and the like)

The scope of this mode is to give feedback on the state of the machine in a short time and in a form that is easily comparable with the calibration, hence the reason for the comparison in the same points.

All the electronic boards that manage the sensors carry out the analog/digital conversion of the necessary signals directly and transfer the data by way of the communication channel.

The electronic boards carry out the acquisition of the corresponding signals every time the central unit sends an acquisition command, responding with the digital value of the acquired signal.

The number of samples to be taken during the acquisition will be established directly by each card on the basis of the programming data sent by the central unit before starting acquisition mode.

It is possible to check for and download updates of the software used directly, by way of the CNC of the machine tool 10, since the CNC can operate as the server of an internal local network, and by way of adapted commands it is also possible to receive the operation status of the detection and monitoring means 19.

The control and management unit of the detection and monitoring means 19 interfaces with the CNC, at each sampling time providing the series of data detected.

A program loaded in the CNC manages the data and carries out the necessary dimensional compensation.

The control and management unit of the detection and monitoring means 19 is further provided with a calibration and self-diagnosis procedure, which interfaces directly with the CNC.

The control system sensors can be connected to the CNC through an Ethernet.

It is preferable that in each electronic board of each individual optical sensor the analog/digital conversion is performed directly, and that all the sensors interface with the electronic control and management unit by way of digital data, so as to reduce problems owing to analog errors, in order to decrease the number of wires necessary, and in order to obtain simple operations for maintenance and assistance.

The data corresponding to the dimensional deviations and to the deformations of the parts of the machine tool 10 are adapted to be used for operations to compensate such deviations and deformations.

The activity of automatically compensating mechanical deformations of the machine tool 10 follows the following operating method:
- the electronic control and management unit of the detection and monitoring means 19 sends all the measurements performed to the CNC of the machine tool, by way of the Ethernet channel,
- a program loaded in the CNC processes and saves such information to a file;
- a compensation program loaded in the CNC performs the verification of the deviations on board the machine, and at this point implements two possible alternative compensation procedures, according to the seriousness of the deviations detected:
   - an automatic procedure, for the case where the mechanical deformations identified are modest in extent, and in which the CNC operates the controlled actuators of the machine tool in order to correct the trim errors;
   - a non-automatic, i.e. manual, procedure, for the case where the mechanical deformations identified are medium/large in extent; such procedure entails some manual operations by mechanical assistance operators, in order to restore the structure of the machine tool to a minimum condition of functionality that enables the machine to be used in observance of the minimum characteristics of functionality and precision, and especially one that makes it possible to use the automatic compensation procedure.

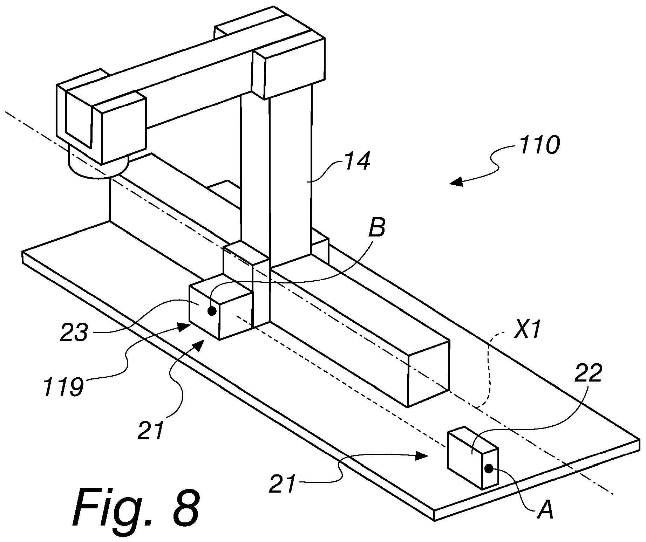

In a second embodiment of the machine tool according to the invention, designated with the reference numeral 110 in Figure 8, and illustrative of a dedicated solution of a peculiar case in which only one item is to be detected, which is the linear deviation of a single reference nodal point B, referred to a first part 12 of the machine 10, in turn corresponding to a controlled axis X1, with respect to a reference nodal point A associated with the footing 11, the optical means 119 for detecting and monitoring the position of one or more of the controlled axes X1, X2, X3 comprising only one device 21 for detecting the translation of the nodal point B, along two axes, X2 and X3, which are perpendicular to the controlled axis X1.

Such device 21 for detecting the translation of a controlled axis comprises an emitter of a laser beam 22, which is adapted to be fixed to the footing 11, and referable to the first nodal point A, and an element for receiving the light signal, for example an optical position sensor 23, which is integral with the second part 14 and referable to the second nodal point B.

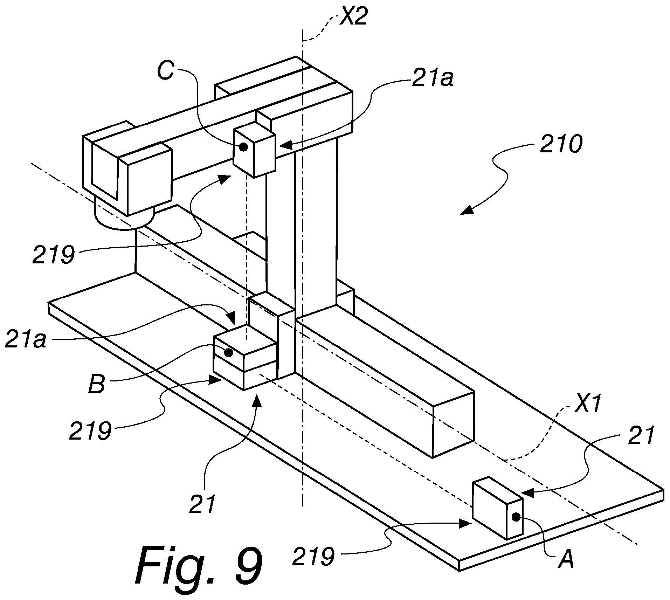

In a third embodiment of the machine tool according to the invention, designated with the reference numeral 210 in Figure 9, and illustrative of a dedicated solution of a peculiar case in which two items are to be detected, which are the linear deviations of two reference nodal points B and C for two corresponding parts of the machine and for the respective controlled axes, the optical means of detecting and monitoring 219 comprising a first device 21 for detecting the translation of the axis X1, along two axes, X2 and X3, which are perpendicular to the controlled axis, and a second device 21a for detecting the translation of the axis X2, along two axes, X1 and X3, which are perpendicular to the controlled axis.

As an alternative, in order to control the linear deviations of two axes, it is possible to have one device 45, as shown in Figure 5, for simultaneously detecting the translation of two mutually perpendicular controlled axes, for example the axis X1 and the axis X2.

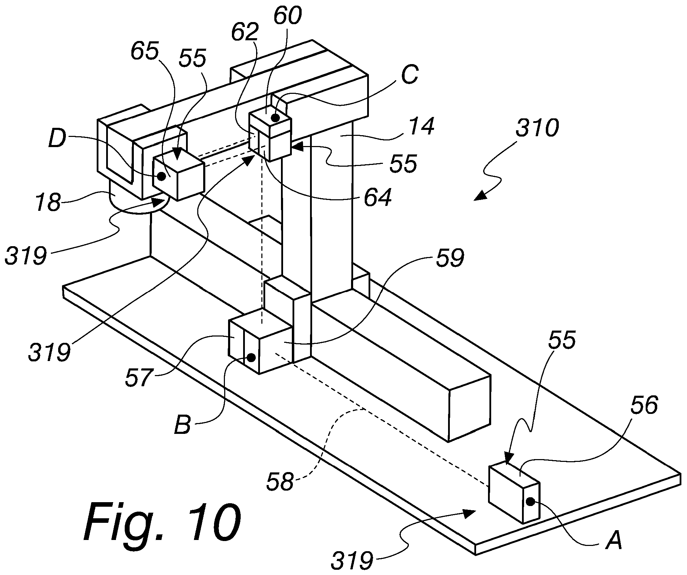

In a fourth embodiment of the machine tool according to the invention, designated with the reference numeral 310 in Figure 10, and illustrative of a dedicated solution of a peculiar case in which the items to be detected are the linear deviations of three nodal points B, C and D, the optical means of detecting and monitoring 319 comprising a device 55 for simultaneously detecting the translation of three mutually perpendicular controlled axes, as described above.

Of such device 55 for simultaneously detecting the translation of three controlled axes, Figure 10 shows:
- an emitter of a laser beam 56, fixed to the footing 11,
- a first optical position sensor (PSD) 57, integral with the second part of the machine 14, and adapted to block the directed laser beam 58 for detecting the relative translations of the laser emitter 56 with respect to the optical sensor 57 according to the axes X2 and X3,
- a first deflector that partially transmits the light beam 59, positioned between the laser emitter 56 and the first optical sensor 57, proximate to and integral with the latter and with the second part of the machine 14,
- a second optical position sensor 60 which is integral with the third part of the machine 16,
- a second deflector that partially transmits the light beam 64, positioned between the first partially transmissive deflector 59 and the second optical sensor 60, arranged proximate to and integral with the latter and with the third part of the machine 16, which is adapted to deflect the laser beam 58 toward a third optical position sensor 62 which is integral with such third part of the machine, and is positioned so as to have an arrangement perpendicular to the deflected laser beam 63 when calibration is complete;
- a 180° reflection element 65, for example a cubic reflector prism or 'corner reflector', designed to be arranged so that it is integral with a machining head 18, the latter being able to move with respect to the third part 16 of the machine.

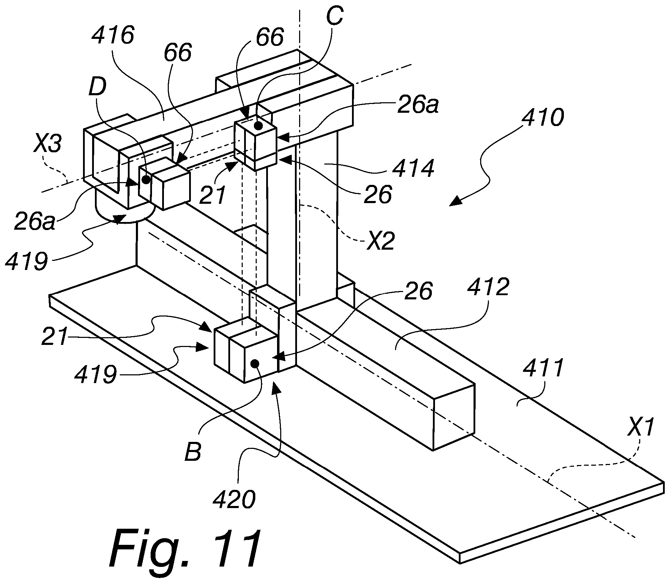

In a fifth embodiment of the machine tool according to the invention, designated with the reference numeral 410 in Figure 11, the detection and monitoring means 419 comprise a first device 26 for detecting the rotation of the axis X2, about two axes, X1 and X3, which are perpendicular to that controlled axis, a second device 26a for detecting the rotation of the axis X3, about two axes, X1 and X2, which are perpendicular to that controlled axis, a device 21 for detecting the translation of the axis X2 with respect to two axes X1 and X3 which are perpendicular thereto, and a device 66 for detecting the translation of the controlled axis X3, with respect to which the machining head 18 slides, along two axes that are mutually perpendicular X1 and X2.

In such fifth embodiment of the machine tool according to the invention, the reference device 420 is integral not with the footing 411 but with the second part 414 of the machine tool 410, therefore a first reference nodal point is constituted by the nodal point B referred to the second part 414 of the machine, a second reference nodal point is constituted by the reference nodal point C for the third part 416 of the machine, and a third reference nodal point is constituted by the reference nodal point D for the machining head 418; such solution is practicable if, for example, the first part 413 is integral with the footing 411 and structured so that its deformations are substantially negligible or fully detectable by way of the means of checking the position which are already integrated in the machine tool 410.

It should be understood that the subject matter of the invention includes all the combinations of the devices 21, 26, 35, 45, 55 and 66 described above, as well as any variations of embodiment that are similar and equivalent, according to the deformations that it is desired to detect and monitor.

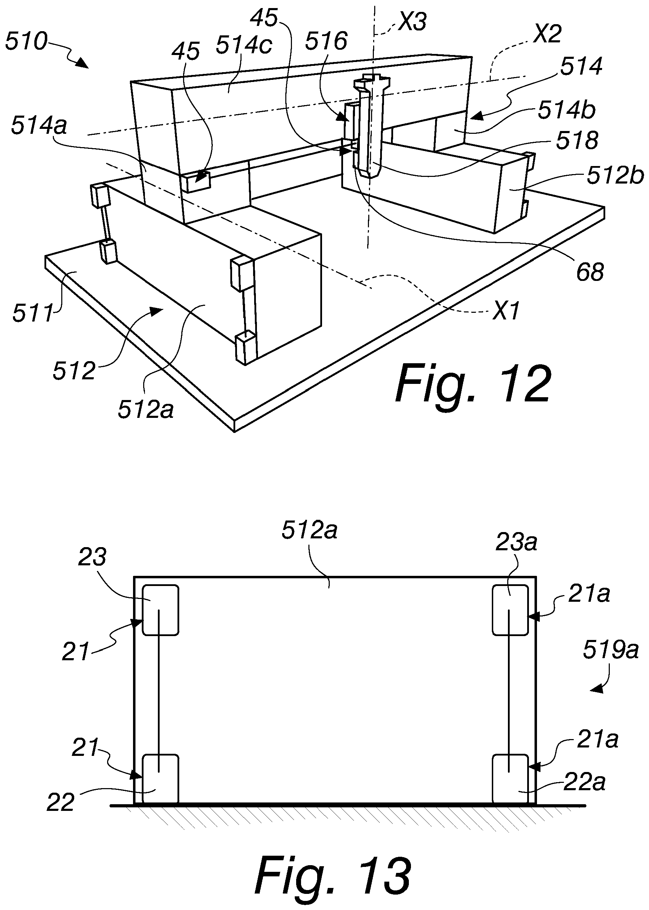

In a sixth embodiment thereof, a machine tool according to the invention is shown schematically in Figure 12 and designated therein with the reference numeral 510.

The machine tool 510 is of the portal type, with a first part 512 which is constituted by two opposing shoulders 512a and 512b which are fixed to the footing 511, a second part 514 being arranged on each shoulder so as to slide along a first controlled axis X1 and being constituted by two opposing turrets 514a and 514b, which can slide in a parallel arrangement on the two shoulders 512a and 512b, which support a crossmember 514c.

A third part 516 slides along a second controlled axis X2 on the crossmember 514c, and is constituted for example by a slider, supporting the machining head 518 which is adapted to translate along a third axis X3.

The detection and monitoring means 519 comprise first means 519a for detecting and monitoring the deformations of the shoulders 512a and 512b, and second means 519b for detecting and monitoring the deformations of the crossmember 514c and of the machining head 518.

The first detection and monitoring means 519a are shown for the purposes of example, in a first variation of embodiment thereof, in Figure 13, where a first shoulder 512a is shown schematically, it being understood that the opposing second shoulder 512b is arranged in the same way.

Such first detection and monitoring means 519a comprise two devices 21 and 21a for detecting the translation of the points where the corresponding optical sensor 23 and 23a is applied with respect to the points where the corresponding laser emitter 22 and 22a is positioned, these last items being integral with the footing 511.

The two devices for detecting the translation 21 and 21a are positioned so as to operate with parallel laser beams, proximate to the lateral edges of each shoulder 512a and 512b.

On the basis of the deviation data detected for the two shoulders 512a and 512b, a first reference nodal point is determined to which to refer the deformations of the remaining second 514 and third 516 parts of the machine tool 510, i.e. the deviations and the rotations of the other reference nodal points.

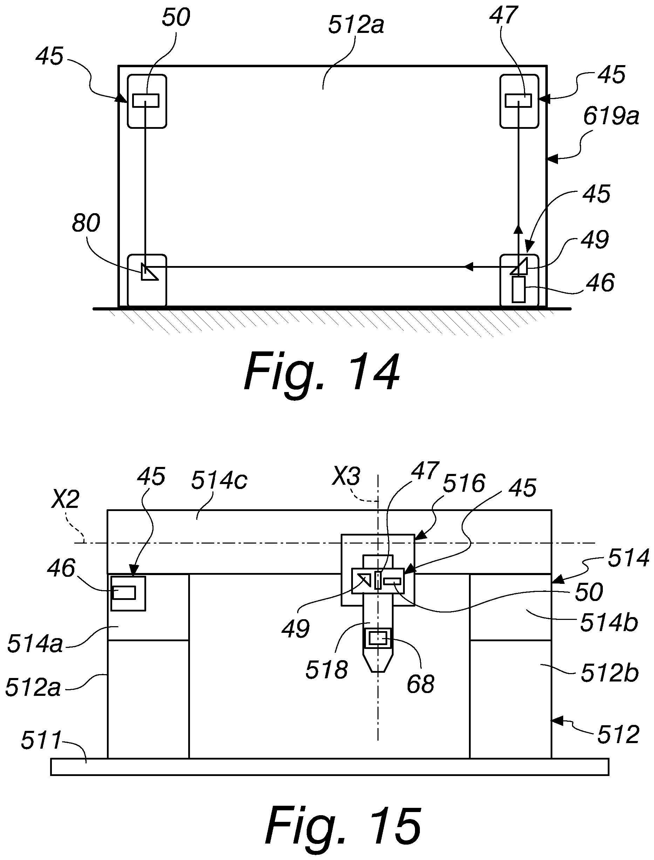

The first detection and monitoring means are shown for the purposes of example, in a second variation of embodiment thereof, in Figure 14, where they are generically designated with the reference numeral 619a and where a first shoulder 512a is shown schematically, it being understood that the opposing second shoulder 512b is arranged in the same way.

Such first means 619a comprise a single laser emitter 46, a deflector that partially transmits the light beam 49, and two optical sensors 47 and 50, similarly to what is described above for the device 45 for detecting and monitoring the translations of two axes, plus a reflector 80 adapted to deflect the light beam 90°.

The laser emitter 46, integral with the footing at a first lower corner of the shoulder 512a, emits a beam toward a first optical sensor 47 arranged proximate to the upper corner of the shoulder 512a, above the laser emitter 46.

The deflector that partially transmits the light beam 49 deflects a part of the light beam toward the reflector 80 positioned at the second lower corner of the shoulder 512a; the deflector 80 deflects the light beam toward the second optical sensor 50, positioned proximate to the upper corner of the shoulder 512a above the reflector 80.

Such first means 619a have one laser emitter less with respect to the first means 519a.

The second detection and monitoring means 519b comprise a device for simultaneously detecting the translation of two mutually perpendicular controlled axes, i.e. the axis X2 and the axis X3, as described above, i.e. comprising:
- an emitter of a laser beam 46, fixed to a turret 514a, and arranged so as to operate parallel to the axis X2,
- a first optical position sensor (PSD) 47, integral with the third part of the machine 516,
- a deflector that partially transmits the light beam 49, for example a partially transmissive pentaprism, positioned between the laser emitter 46 and the first optical sensor 47, proximate to and integral with the latter and with the third part of the machine 516, which is adapted to deflect the laser beam toward a 180° reflection element 68, for example a cubic reflector prism or 'corner reflector', which is fixed to the head 518 and is in turn designed to deflect the laser beam toward a second optical position sensor 50 which is integral with the third part of the machine 516, and is positioned so as to have an arrangement perpendicular with respect to the first sensor 47.

In particular, with the invention a machine tool has been devised with which it is possible to determine with precision the deviations of the machining head with respect to the specified operating positions and trajectories, so as to be able to correct them, thus periodically restoring the necessary operating precision to the machine.

Furthermore, with the invention an apparatus has been devised to determine such deviations.

Moreover, with the invention a machine tool has been devised which is rapidly adaptable to the environmental and vibrational conditions of operation, thanks to the capacity to detect linear deviations and structural angular deviations, due also to environmental and vibrational conditions, and hence to compensate for such deviations.

The invention, thus conceived, is susceptible of numerous modifications and variations, all of which are within the scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A Cartesian numerically controlled machine tool (10) for high-precision machining, comprising:
- a footing (11),
- a first part (12; 512) with first movement means (13) for the movement of a second part (14; 514) with respect to a first controlled axis (X1), said first part (12; 512) being mounted on said footing (11);
- a second part (14) with second movement means (15) for the movement of a third part (16; 516) with respect to a second controlled axis (X2),
- the third part (16; 516) with third movement means (17) for the movement of a machining head (18) with respect to a third controlled axis (X3),
- a machining head (18; 518),
- at least one reference nodal point (A, B, C, D) for each of one or more of said controlled axes (X1, X2, X3) with respect to a reference device (20) that is integral with a part of said machine tool (10),
wherein a reference nodal point (A) is established on said footing (11), a reference nodal point (B) is established on said first part (12; 512), a reference nodal point (C) is established on said second part (14) and a reference nodal point (D) is established on said third part (1 6; 516),
- -on board, optical means (19; 519) for detecting and monitoring the position of the at least one reference nodal point (B, C, D) for each of one or more of said controlled axes (X1, X2, X3) with respect to said reference device (20), said reference device (20) being integral with the footing (11) and being associated with the reference nodal point (A) established on the footing (11).

2. The Cartesian machine tool according to claim 1, **characterized in that** said optical means (19) comprise at least one device (21) for detecting the translation of a reference nodal point for a controlled axis along two axes that are perpendicular to said controlled axis.

3. The Cartesian machine tool according to any of the preceding claims, **characterized in that** said optical means (19) comprise at least one device (26) for detecting the rotation of a controlled axis about two axes that are perpendicular to said controlled axis, at a reference nodal point.

4. The Cartesian machine tool according to any of the preceding claims, **characterized in that** said optical means (19) comprise at least one device (35) for simultaneously detecting the translation of a nodal point of a controlled axis along two axes that are perpendicular to said controlled axis, and the rotation of a controlled axis about two axes that are perpendicular to said controlled axis at the same reference nodal point.

5. The Cartesian machine tool according to any of the preceding claims, **characterized in that** said optical means (19) comprise at least one device (45) for simultaneously detecting the translation of two reference nodal points, each referred to one axis of two controlled axes, which are mutually perpendicular, along two axes that are perpendicular to each controlled axis.

6. The Cartesian machine tool according to any of the preceding claims, **characterized in that** said optical means (19) comprise at least one device (55) for simultaneously detecting the translation of the nodal points, each referred to one of three controlled axes, which are mutually perpendicular.

7. The Cartesian machine tool according to any of the preceding claims, **characterized in that** said optical means (19) comprise at least one device (66) for detecting the translation of a controlled axis (X3), with respect to which the machining head (18) slides, along two axes that are mutually perpendicular (X1, X2).

8. The Cartesian machine tool according any of the preceding claims, **characterized in that** said optical means (19) comprise:
- a device (55) for simultaneously detecting the translation of the nodal points, each referred to one of three controlled axes, which in turn comprises:
- a laser emitter (56), which is integral with the footing (11),
- a first PSD optical sensor (57), which is integral with the second part (14), with a corresponding first deflector that partially transmits the light beam (59),
- a second PSD optical sensor (60), which is integral with the third part (16), with a respective second deflector that partially transmits the light beam (64),
- a third PSD optical sensor (62), which is integral with the third part (16),
- a 180° reflection element (65), preset to be arranged so as to be integral with the machining head (18), and further:
- a first device (26) for detecting the rotation of a first controlled axis (X1), with an emitter of a laser beam (27), which is fixed to the footing (11), and a fully reflective mirror (28), which is integral with the second part (14) of the machine,
- a second device (26a) for detecting the rotation of a second controlled axis (X2), with an emitter of a laser beam (27a), which is fixed to the second part (14), and a fully reflective mirror (28a), which is integral with the third part (16) of the machine,
- a third device (26b) for detecting the rotation of a third controlled axis (X3), with an emitter of a laser beam (27b), which is fixed to the third part (16), and a fully reflective mirror (28b), which is integral with the machining head (18).

9. The Cartesian machine tool according to any of claims 1 to 7, **characterized in that** it is of the portal type, with the first part (512) being constituted by two opposing shoulders (512a, 512b) which are fixed to the footing (511), the second part (514) being arranged on each shoulder so as to slide along a first controlled axis (X1) and being constituted by two opposing turrets (514a, 514b), which can slide in a parallel arrangement on the two shoulders (512a, 512b), which support a crossmember (514c), the third part (516) sliding on said crossmember (514c) along a second controlled axis (X2) and supporting the machining head (518) which is adapted to translate along a third axis (X3), said detection and monitoring means (519) comprising first means (519a) for detecting and monitoring the deformations of the shoulders (512a, 512b), and second means (519b) for detecting and monitoring the deformations of the crossmember (514c) and of the machining head (518).

## Patentansprüche

1. Eine kartesisch numerisch gesteuerte Werkzeugmaschine (10) für hochpräzise Bearbeitung, umfassend:
- einen Unterbau (11),
- einen ersten Teil (12; 512) mit ersten Bewegungsmitteln (13) für die Bewegung eines zweiten Teils (14; 514) in Bezug auf eine erste gesteuerte Achse (X1), wobei der erste Teil (12; 512) auf dem Unterbau (11) montiert ist;
- ein zweites Teil (14) mit zweiten Bewegungsmitteln (15) für die Bewegung eines dritten Teils (16; 516) in Bezug auf eine zweite gesteuerte Achse (X2),
- ein drittes Teil (16; 516) mit dritten Bewegungsmitteln (17) für die Bewegung eines Bearbeitungskopfes (18) in Bezug auf eine dritte gesteuerte Achse (X3),
- ein Bearbeitungskopf (18; 518),
- mindestens einen Referenzknotenpunkt (A, B, C, D) für jede der einen oder mehreren gesteuerten Achsen (X1, X2, X3) in Bezug auf eine Referenzvorrichtung (20), die mit einem Teil der Werkzeugmaschine (10) integriert ist,
wobei ein Referenzknotenpunkt (A) auf dem Unterbau (11) festgelegt ist, ein Referenzknotenpunkt (B) auf dem ersten Teil (12; 512) festgelegt ist, ein Referenzknotenpunkt (C) auf dem zweiten Teil (14) festgelegt ist und ein Referenzknotenpunkt (D) auf dem dritten Teil (16; 516) festgelegt ist,
- an Bord optische Mittel (19; 519) zum Erfassen und Überwachen der Position des mindestens einen Referenzknotenpunkts (B, C, D) für jede der einen oder mehreren der gesteuerten Achsen (X1, X2, X3) in Bezug auf das Referenzgerät (20) vorgesehen sind, wobei die Referenzvorrichtung (20) mit dem Unterbau (11) fest verbunden ist und mit dem auf dem Unterbau (11) festgelegten Referenzknotenpunkt (A) verbunden ist.

2. Kartesische Werkzeugmaschine nach Anspruch 1, **dadurch gekennzeichnet, dass** die optischen Mittel (19) mindestens ein Gerät (21) zum Erfassen der Verschiebung eines Referenzknotenpunkts für eine gesteuerte Achse entlang zweier Achsen umfassen, die senkrecht zu der gesteuerten Achse verlaufen.

3. Kartesische Werkzeugmaschine nach einem der vorhergehenden Ansprüche, **dadurch gekennzeichnet, dass** die optischen Mittel (19) mindestens ein Gerät (26) zum Erfassen der Drehung einer gesteuerten Achse um zwei Achsen umfassen, die senkrecht zu der gesteuerten Achse an einem Referenzknotenpunkt verlaufen.

4. Kartesische Werkzeugmaschine nach einem der vorhergehenden Ansprüche, **dadurch gekennzeichnet, dass** die optischen Mittel (19) mindestens eine Vorrichtung (35) zum gleichzeitigen Erfassen der Verschiebung eines Knotenpunkts einer gesteuerten Achse entlang zweier Achsen umfassen, die senkrecht zu der gesteuerten Achse stehen, und der Drehung einer gesteuerten Achse um zwei Achsen, die senkrecht zu der gesteuerten Achse am gleichen Referenzknotenpunkt stehen.

5. Kartesische Werkzeugmaschine nach einem der vorhergehenden Ansprüche, **dadurch gekennzeichnet, dass** die optischen Mittel (19) mindestens eine Vorrichtung (45) zum gleichzeitigen Erfassen der Verschiebung zweier Referenzknotenpunkte umfassen, die sich jeweils auf eine Achse von zwei gesteuerten Achsen beziehen, die senkrecht zueinander entlang zweier Achsen stehen, die senkrecht zu jeder gesteuerten Achse stehen.

6. Kartesische Werkzeugmaschine nach einem der vorhergehenden Ansprüche, **dadurch gekennzeichnet, dass** die optischen Mittel (19) mindestens eine Vorrichtung (55) zum gleichzeitigen Erfassen der Verschiebung der Knotenpunkte umfassen, die sich jeweils auf eine von drei gesteuerten Achsen beziehen, die senkrecht zueinanderstehen.

7. Kartesische Werkzeugmaschine nach einem der vorhergehenden Ansprüche, **dadurch gekennzeichnet, dass** die optischen Mittel (19) mindestens eine Vorrichtung (66) zum Erfassen der Translation einer gesteuerten Achse (X3), entlang der der Bearbeitungskopf (18) gleitet, entlang zweier zueinander senkrechter Achsen (X1, X2) umfasst.

8. Die kartesische Werkzeugmaschine nach einem der vorhergehenden Ansprüche, **dadurch gekennzeichnet, dass** die optischen Mittel (19) umfassen:
- eine Vorrichtung (55) zum gleichzeitigen Erfassen der Translation der Knotenpunkte, die sich jeweils auf eine von drei gesteuerten Achsen beziehen, die wiederum umfasst:
- einen Laseremitter (56), der mit dem Unterbau (11) fest verbunden ist,
- einen ersten optischen PSD-Sensor (57), der mit dem zweiten Teil (14) fest verbunden ist, mit einem entsprechenden ersten Deflektor, der den Lichtstrahl teilweise durchlässt (59),
- einen zweiten optischen PSD-Sensor (60), der mit dem dritten Teil (16) fest verbunden ist, mit einem entsprechenden zweiten Deflektor, der den Lichtstrahl teilweise durchlässt (64),
- einen dritten optischen PSD-Sensor (62), der mit dem dritten Teil (16) fest verbunden ist,
- ein 180°-Reflexionselement (65), das so voreingestellt ist, dass es mit dem Bearbeitungskopf (18) fest verbunden ist, und ferner:
- eine erste Vorrichtung (26) zum Erfassen der Rotation einer ersten gesteuerten Achse (X1) mit einem Emitter eines Laserstrahls (27), der am Unterbau (11) befestigt ist, und ein vollreflektierender Spiegel (28), der mit dem zweiten Teil (14) der Maschine verbunden ist,
- eine zweite Vorrichtung (26a) zum Erfassen der Drehung einer zweiten gesteuerten Achse (X2), mit einem Emitter eines Laserstrahls (27a), der am zweiten Teil (14) befestigt ist, und ein vollreflektierender Spiegel (28a), der mit dem dritten Teil (16) der Maschine verbunden ist,
- eine dritte Vorrichtung (26b) zum Erfassen der Drehung einer dritten gesteuerten Achse (X3), mit einem Emitter eines Laserstrahls (27b), der mit dem dritten Teil (16) der Maschine verbunden ist und einen vollreflektierenden Spiegel (28b), der mit dem Bearbeitungskopf (18) integriert ist.

9. Kartesische Werkzeugmaschine nach einem der Ansprüche 1 bis 7, **dadurch gekennzeichnet, dass** sie vom Portaltyp ist, wobei der erste Teil (512) aus zwei gegenüberliegenden Schultern (512a, 512b) besteht, die am Unterteil (511) befestigt sind, wobei der zweite Teil (514) auf jeder Schulter so angeordnet ist, dass er entlang einer ersten kontrollierten Achse (X1) gleitet, und aus zwei gegenüberliegenden Revolvern (514a, 514b) besteht, die in paralleler Anordnung auf den beiden Schultern (512a, 512b) gleiten können, die einen Querträger (514c) stützen, wobei der dritte Teil (516) auf dem Querträger (514c) entlang einer zweiten kontrollierten Achse (X2) gleitet und den Bearbeitungskopf (518) stützt, der angepasst ist, um entlang einer dritten Achse (X3) verschoben zu werden, wobei die Erfassungs- und Überwachungsmittel (519) erste Mittel (519a) zum Erfassen und Überwachen der Verformungen der Schultern (512a, 512b), und zweite Mittel (519b) zum Erfassen und Überwachen der Verformungen des Querträgers (514c) und des Bearbeitungskopfes (518) umfassen.

## Revendications

1. Machine-outil à commande numérique cartésienne (10) pour l'usinage de haute précision, comprenant:
- un socle (11),
- une première pièce (12; 512) avec des premiers moyens de déplacement (13) pour le déplacement d'une seconde pièce (14; 514) par rapport à un premier axe commandé (X1), ladite première pièce (12; 512) étant montée sur ledit socle (11) ;
- une deuxième partie (14) avec des deuxièmes moyens de déplacement (15) pour le déplacement d'une troisième partie (16; 516) par rapport à un deuxième axe contrôlé (X2),
la troisième partie (16; 516) avec des troisièmes moyens de déplacement (17) pour le déplacement d'une tête d'usinage (18) par rapport à un troisième axe contrôlé (X3),
- une tête d'usinage (18; 518),
- au moins un point nodal de référence (A, B, C, D) pour chacun d'un ou plusieurs desdits axes contrôlés (X1, X2, X3) par rapport à un dispositif de référence (20) qui est solidaire d'une partie de ladite machine-outil (10),
dans lequel un point nodal de référence (A) est établi sur ledit socle (11), un point nodal de référence (B) est établi sur ladite première partie (12; 512), un point nodal de référence (C) est établi sur ladite deuxième partie (14) et un point nodal de référence (D) est établi sur ladite troisième partie (16; 516),
- des moyens optiques embarqués (19; 519) de détection et de surveillance de la position du ou des points nodaux de référence (B, C, D) pour chacun d'un ou plusieurs desdits axes commandés (X1, X2, X3) par rapport audit dispositif de référence (20), ledit dispositif de référence (20) étant solidaire du socle (11) et étant associé au point nodal de référence (A) établi sur le socle (11).

2. Machine-outil cartésienne selon la revendication 1, **caractérisée en ce que** lesdits moyens optiques (19) comprennent au moins un dispositif (21) de détection de la translation d'un point nodal de référence pour un axe commandé selon deux axes perpendiculaires audit axe commandé.

3. Machine-outil cartésienne selon l'une quelconque des revendications précédentes, **caractérisée en ce que** lesdits moyens optiques (19) comprennent au moins un dispositif (26) de détection de la rotation d'un axe commandé autour de deux axes perpendiculaires audit axe commandé, en un point nodal de référence.

4. Machine-outil cartésienne selon l'une quelconque des revendications précédentes, **caractérisée en ce que** lesdits moyens optiques (19) comprennent au moins un dispositif (35) de détection simultanée de la translation d'un point nodal d'un axe commandé selon deux axes perpendiculaires audit axe commandé, et de la rotation d'un axe commandé autour de deux axes perpendiculaires audit axe commandé au même point nodal de référence.

5. Machine-outil cartésienne selon l'une quelconque des revendications précédentes, **caractérisée en ce que** lesdits moyens optiques (19) comprennent au moins un dispositif (45) de détection simultanée de la translation de deux points nodaux de référence, chacun rapporté à un axe parmi deux axes commandés, mutuellement perpendiculaires, selon deux axes perpendiculaires à chaque axe commandé.

6. Machine-outil cartésienne selon l'une quelconque des revendications précédentes, **caractérisée en ce que** lesdits moyens optiques (19) comprennent au moins un dispositif (55) de détection simultanée de la translation des points nodaux, chacun rapporté à l'un des trois axes commandés, mutuellement perpendiculaires.

7. Machine-outil cartésienne selon l'une quelconque des revendications précédentes, **caractérisée en ce que** lesdits moyens optiques (19) comprennent au moins un dispositif (66) de détection de la translation d'un axe commandé (X3), par rapport auquel coulisse la tête d'usinage (18), selon deux axes mutuellement perpendiculaires (X1, X2).

8. Machine-outil cartésienne selon l'une quelconque des revendications précédentes, **caractérisée en ce que** lesdits moyens optiques (19) comprennent:
- un dispositif (55) de détection simultanée de la translation des points nodaux, chacun rapporté à l'un des trois axes contrôlés, qui comprend à son tour:
- un émetteur laser (56), qui est solidaire de la semelle (11),
- un premier capteur optique PSD (57), qui est solidaire de la deuxième partie (14), avec un premier déflecteur correspondant qui transmet partiellement le faisceau lumineux (59),
- un deuxième capteur optique PSD (60), qui est solidaire de la troisième partie (16), avec un deuxième déflecteur respectif qui transmet partiellement le faisceau lumineux (64),
- un troisième capteur optique PSD (62), qui est solidaire de la troisième partie (16),
- un élément de réflexion à 180° (65), préréglé pour être disposé de manière à être solidaire de la tête d'usinage (18), et en outre:
- un premier dispositif (26) de détection de la rotation d'un premier axe contrôlé (X1), avec un émetteur d'un faisceau laser (27), qui est fixé au socle (11), et un miroir entièrement réfléchissant (28), qui est solidaire de la deuxième partie (14) de la machine,
- un deuxième dispositif (26a) de détection de la rotation d'un deuxième axe commandé (X2), avec un émetteur d'un faisceau laser (27a), qui est fixé à la deuxième partie (14), et un miroir entièrement réfléchissant (28a), qui est solidaire de la troisième partie (16) de la machine,
- un troisième dispositif (26b) de détection de la rotation d'un troisième axe commandé (X3), avec un émetteur d'un faisceau laser (27b), qui est fixé à la troisième partie (16), et un miroir entièrement réfléchissant (28b), qui est solidaire de la tête d'usinage (18).

9. Machine-outil cartésienne selon l'une quelconque des revendications 1 à 7, **caractérisée en ce qu'**elle est du type portique, la première partie (512) étant constituée de deux épaulements opposés (512a, 512b) fixés au socle (511), la deuxième partie (514) étant disposée sur chaque épaulement de manière à coulisser selon un premier axe commandé (X1) et étant constituée de deux tourelles opposées (514a, 514b) pouvant coulisser parallèlement sur les deux épaulements (512a, 512b) qui supportent une traverse (514c), la troisième partie (516) coulissant sur ladite traverse (514c) selon un deuxième axe commandé (X2) et supportant la tête d'usinage (518) qui est adaptée à se translater selon un troisième axe (X3), lesdits moyens de détection et de contrôle (519) comprenant des premiers moyens (519a) de détection et de contrôle des déformations des épaulements (512a, 512b), et des seconds moyens (519b) de détection et de surveillance des déformations de la traverse (514c) et de la tête d'usinage (518).
